# EUROPEAN PATENT SPECIFICATION

(11) **EP 1 475 776 B1**
(45) Date of publication and mention of the grant of the patent: **21.06.2006**
(21) Application number: 04008591.2
(22) Date of filing: 08.04.2004
(51) Int. Cl.: G10L 15/06

(54) **Dynamic pronunciation support for speech recognition training**
Dynamische Aussprache-Unterstützung bei der Lernphase zur Spracherkennung
Support dynamique de prononciation pendant l'apprentissage pour la reconnaissance de la parole

(30) Priority: 01.05.2003 US 427216
(43) Date of publication of application: 10.11.2004
(73) Proprietor: MICROSOFT CORPORATION, Redmond, WA 98052 (US)
(72) Inventor: Ju, Yun-Cheng, Bellevue Washington 98006 (US); Hon, Hsiao-Wuen, Bellevue Washington 98006 (US); Senju, Kazuhiro, Woodinville Washington 98072 (US)
(74) Representative: Grünecker, Kinkeldey, Stockmair & Schwanhäusser Anwaltssozietät

(56) References cited:
- EP-A- 1 028 410
- US-A1- 2002 116 414
- "SPEECH-RECOGNITION SYSTEM ENROLLMENT PROGRAM WITH TRAINING FEATURES" IBM TECHNICAL DISCLOSURE BULLETIN, IBM CORP. NEW YORK, US, vol. 37, no. 10, 1 October 1994 (1994-10-01), page 149, XP000475610 ISSN: 0018-8689

## Description

The present invention relates to pattern recognition. More particularly, the present invention relates to an improvement for training modern speech recognition systems.

Speech recognition systems are generally trained in order to enhance their ability to recognize spoken speech. During the process of training, the trainer will read or otherwise provide a relatively sizeable quantity of speech to the speech recognition system. The speech provided to the system is known and thus the trainer's utterances of the known speech can be used to adjust the mathematical models used for speech recognition to thereby improve accuracy. In general, the more speech that is provided to the speech recognition system during training, the more accurate subsequent speech recognition will be.

Accordingly, the process of training the speech recognition system can take some time. The ability to keep a trainer comfortable in the acoustic model training process for as long as possible is very important. Far eastern languages, such as Japanese or Chinese, present a particular challenge in this regard. Modern Japanese, like Chinese, is written heavily with the Kanji writing system. Kanji (or Chinese characters) are ideographs that represent sound and meaning, which sometimes create problems for users to pronounce. Pronunciation aids called rubies (Kana for Japanese Pin Yin for Chinese) have been developed to provide pronunciation labeling for this purpose. Currently, during speech recognition training for Kanji-based languages, the rubi for a given word is displayed above each and every word required for speech training. Accordingly, the display of both the speech for the trainer to read and the associated rubi can be relatively cluttered and confusing. Moreover, it is believed that displaying a rubi for each and every word may, in fact, offend those trainers that know how to pronounce the vast majority of the words in the training session.

EP-A-1 028 410 discloses a speech recognition enrollment system and a respective method thereof for enrolling a user in a speech recognition system without requiring reading. The described system uses an audio user interface having audible output and an audible input. The text phrases, which are also displayed on a graphical user display are audible played. After that the user is audibly prompted to speak the played phrase. The enrollment of the user is processed based on the audibly prompted and subsequently spoken phrases. As mentioned before, a graphical user interface can also be generated for displaying the text corresponding to the phrases and to the audible prompts. Furthermore, the GUI is used for displaying a plurality of icons for user activation and for selectively distinguishing different icons at different times by at least one of color, shape and animation.

"Speech-Recognition System Enrollment Program with Training Features" IBM Technical Disclosure Bulletin, IBM Corp. New York, US, vol. 37, no. 10, 1 October 1994, page 149 discloses the use of an enrollment procedure for speech recognition system as a tool for training the potential user to speak in a manner facilitating the speech recognition process. In the enrollment process, potential users of the system speak several sentences into the system, as visual indication is provided on the display screen whenever a word is not spoken in this manner.

Providing a speech recognition training session which facilitates pronunciation of Chinese and Japanese characters while simultaneously simplifying the training display and not offending the trainer would present a significant advance to speech recognition training for Kanji-based languages such as Chinese and Japanese. Further, it is believed that such a system would improve the ability of the speech trainer to train more accurately for a longer period of time thereby improving the overall speech recognition of the speech system. Improved recognition would further enhance the user's overall impression of the speech recognition system.

Accordingly, it is an object of the present invention to provide an improved user interface module for speech recognition training and a respective method thereof which facilitates pronunciation of Chinese and Japanese characters while simultaneously simplifying the training display and not offending the trainer.

This object is solved by the present invention and in particular by the subject matter of the independent claims. Preferred embodiments are the subject matter of the dependent claims.

A speech recognition training system for Kanji-based languages is provided. The system loads a pronunciation aid for each and every ideograph in the training speech, but does not in fact display an ideograph until the training system recognizes a pronunciation difficulty. Once a pronunciation difficulty is identified, the associated pronunciation aid (rubi) for the troubling ideograph is displayed.

FIG. 1 is a block diagram of one computing environment in which the present invention may be practiced.

FIG. 2 is a block diagram of an alternative computing environment in which the present invention may be practiced.

FIG. 3 is a diagrammatic view of a speech recognition training user interface in accordance with the prior art.

FIG. 4 is a diagrammatic view of a speech recognition training user interface in accordance with an embodiment of the present invention.

FIG. 5 is another diagrammatic view of a speech recognition training user interface in accordance with an embodiment of the present invention.

FIG. 6 is a block diagram of a method of selectively aiding pronunciation during speech training in accordance with an embodiment of the present invention.

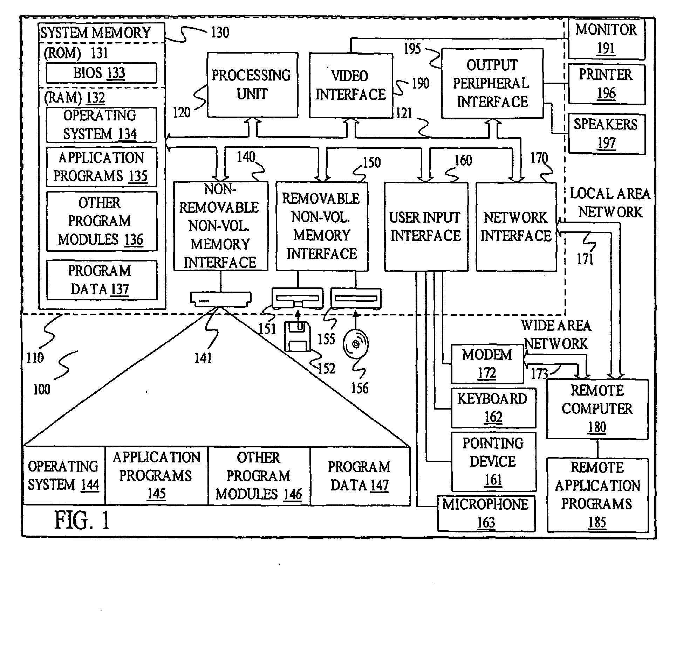

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well-known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, telephony systems, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general-purpose computing device in the form of a computer 110. Components of computer 110 may include, but are not limited to, a central processing unit 120, a system memory 130, and a system bus 121 that couples various system components including the system memory to the processing unit 120.

The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

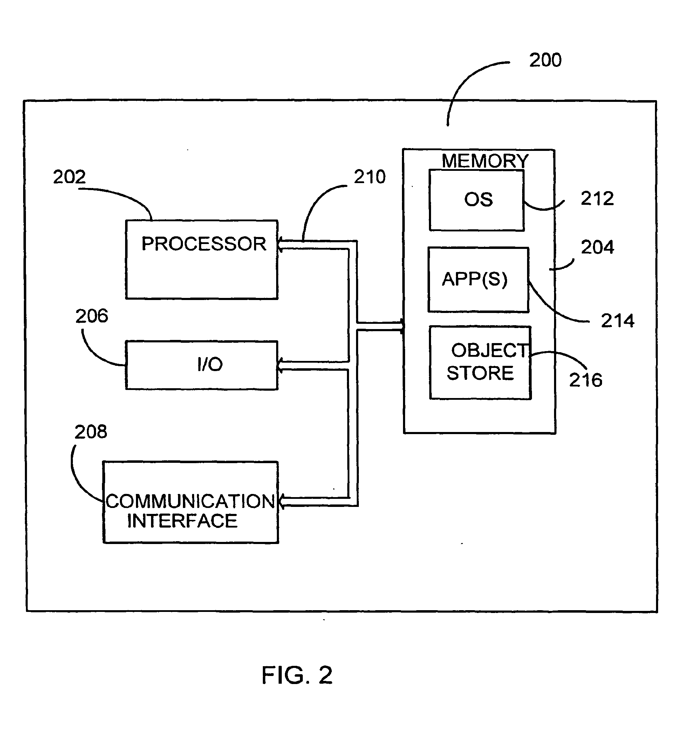

FIG. 2 is a block diagram of a mobile device 200, which is an exemplary computing environment. Mobile device 200 includes a microprocessor 202, memory 204, input/output (I/O) components 206, and a communication interface 208 for communicating with remote computers or other mobile devices. In one embodiment, the afore-mentioned components are coupled for communication with one another over a suitable bus 210.

Memory 204 is implemented as non-volatile electronic memory such as random access memory (RAM) with a battery back-up module (not shown) such that information stored in memory 204 is not lost when the general power to mobile device 200 is shut down. A portion of memory 204 is preferably allocated as addressable memory for program execution, while another portion of memory 204 is preferably used for storage, such as to simulate storage on a disk drive.

Memory 204 includes an operating system 212, application programs 214 as well as an object store 216. During operation, operating system 212 is preferably executed by processor 202 from memory 204. Operating system 212, in one preferred embodiment, is a WINDOWS® CE brand operating system commercially available from Microsoft Corporation. Operating system 212 is preferably designed for mobile devices, and implements database features that can be utilized by applications 214 through a set of exposed application programming interfaces and methods. The objects in object store 216 are maintained by applications 214 and operating system 212, at least partially in response to calls to the exposed application programming interfaces and methods.

Communication interface 208 represents numerous devices and technologies that allow mobile device 200 to send and receive information. The devices include wired and wireless modems, satellite receivers and broadcast tuners to name a few. Mobile device 200 can also be directly connected to a computer to exchange data therewith. In such cases, communication interface 208 can be an infrared transceiver or a serial or parallel communication connection, all of which are capable of transmitting streaming information.

Input/output components 206 include a variety of input devices such as a touch-sensitive screen, buttons, rollers, and a microphone as well as a variety of output devices including an audio generator, a vibrating device, and a display. The devices listed above are by way of example and need not all be present on mobile device 200. In addition, other input/output devices may be attached to or found with mobile device 200 within the scope of the present invention.

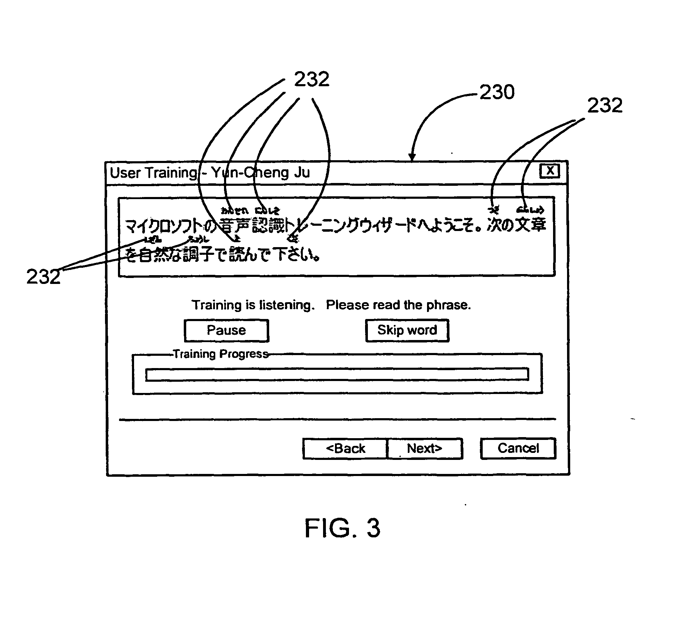

Under one aspect of the present invention a user interface component is employed which dynamically displays rubies for only words that a trainer is having difficulty pronouncing. This new UI component 240 provides Japanese and Chinese users and more friendly and comfortable training session. Fig. 3 illustrates a user interface component in accordance with the prior art. In the past, Prompt File Display user interface module 230, before displaying a sentence to the trainer to read, prepares the rubies 232 for all words and then displays all of the rubies 232 alone with the full sentence. Prior art user interface component 230 then waits from notifications from the speech recognition engine to highlight the words spoken to show progress and to re-create new context-free grammars to continue the adaptation for the rest of the sentence if any rejections or premature long pauses are detected.

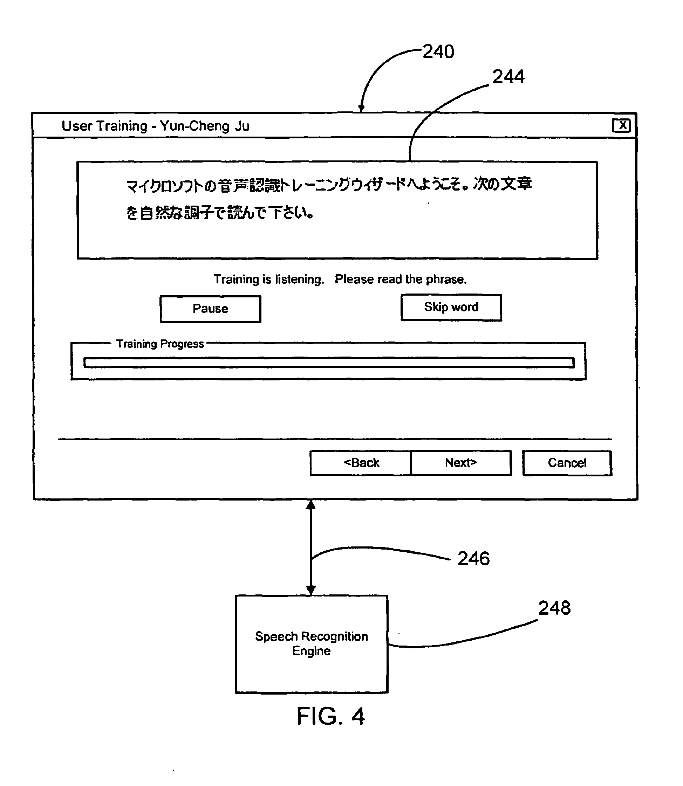

In accordance with one broad aspect of the present invention, user interface module 240 prepares the rubies but does not in fact display any of them. As a result, the trainer only sees plain sentences when they start each new page of training text. This is illustrated in Fig. 4. As user interface module 240 proceeds with the sentences, module 240 will display rubies proximate a troubling word each time a pronunciation difficulty (speech recognition rejection or long pause identification) is observed. Module 240 preferably includes training text portion 244 for displaying a quantity of training text. Module 240 also includes a communication channel 246 for receiving notifications from speech recognition engine 248. In the past, a speech recognition engine would simply provide an indication of recognized words such that the trainer is appropriately prompted to keep reading. However, module 240 uses the communication channel with recognition engine 248 to receive notifications of pronunciation difficulties. In response, module 240 selectively displays rubies only for words upon which the trainer has encountered pronunciation difficulty. Thus, it is entirely possible that the display might not be interrupted or segmented with rubies if the trainer can read all of the text without pronunciation difficulties. It is believed that this will provide the simplest and most effective speech training display for trainers.

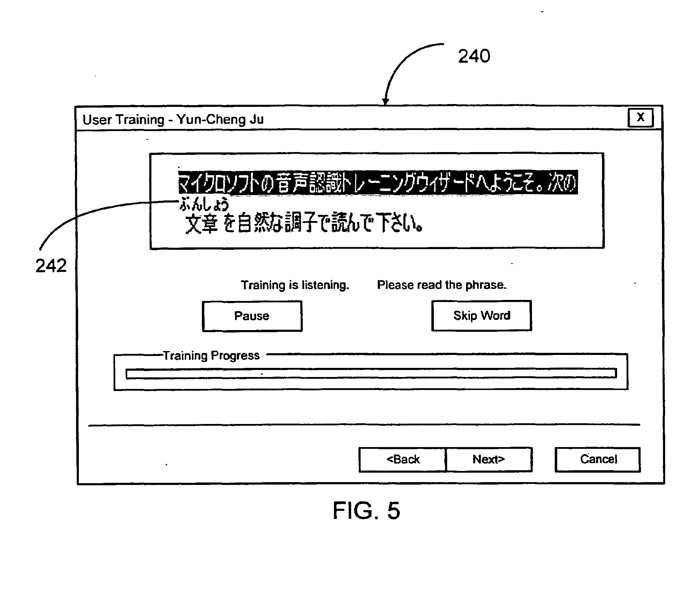

Fig. 5 illustrates a situation where the trainer encounters pronunciation difficulties during speech training. User interface module 240 displays rubies as needed. In this situation, the trainer does not know the correct pronunciation of the word and so a rejection notification is generated by the speech recognition engine and received by user interface module 240. User interface module 240 now carefully places the rubi 242 for the troubling word on the display in a manner that indicates the pronunciation for that word and allows that trainer to continue.

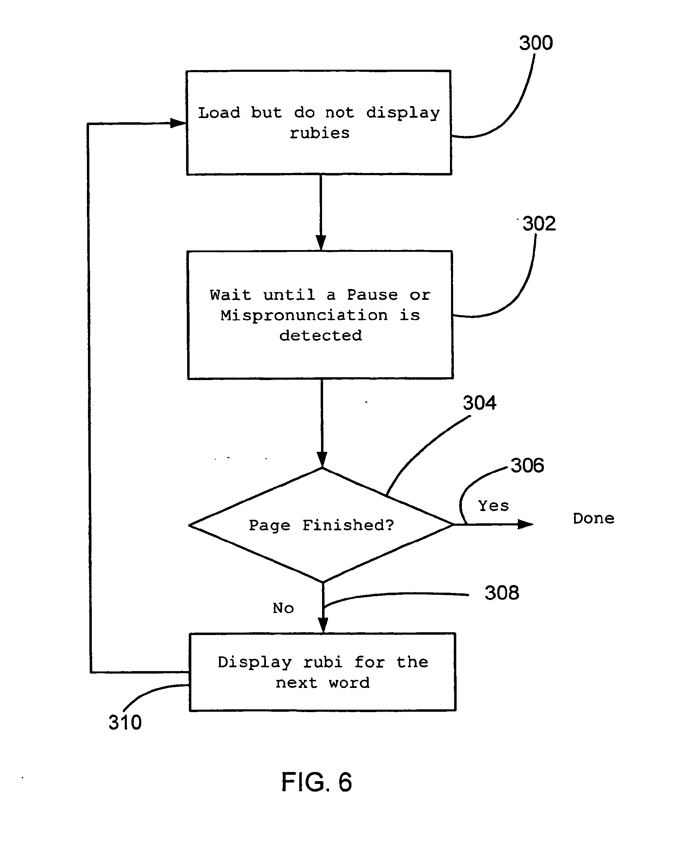

Fig. 6 is a system flow chart of a method of selectively displaying rubies for Kanji-based speech training text in accordance with an aspect of the present invention. At block 300, the user interface module will initially display no rubies though at block 300 all rubies for the training text are loaded into system memory. At block 302, a pronunciation difficulty is detected by a speech recognition. Such difficulties include, for example, a pause or mispronunciation. However, other suitable detectable pronunciation difficulties can also be used in accordance with embodiments of the present invention.

At block 302, the speech recognition module (not shown) informs user interface module 240 of the detected pronunciation difficulty. Control then passes to block 304 where the user interface module determines whether the training page has been completed by the trainer. If the training page has, in fact, been completed, then control passes along route 306 and training for that page is done. However, as indicated along path 308, if the page has not been completed by the trainer, then the user interface module will display the rubi for the next word in the training text, as indicated at block 310. Once the rubi has been displayed, control returns to block 302 and the method repeats.

Although the present invention has been described with reference to particular embodiments, workers skilled in the art will recognize that changes may be made in form and detail without departing from the scope of the invention as defined by the appended independent claims. For example, while pronunciation aids described herein have been textual (rubies) other suitable pronunciation aids, such as sound recordings of the correct pronunciation can also be dynamically provided.

## Claims

1. A user interface module (240) for speech recognition training, the module comprising:
a training text portion (244) for displaying training text;
a communication channel (246) coupleable to a speech recognition engine (248) to receive an indication of pronunciation difficulty from the engine relative to a troubling word within the training text; and
a selectively displayed pronunciation aid (242) disposed to indicate a pronunciation of the troubling word in response to the indication of pronunciation difficulty,
**characterized in that**
the pronunciation aid is only displayed after the pronunciation difficulty has been detected by the speech recognition engine.

2. The module of claim 1, wherein the selectively displayed pronunciation aid is a rubi.

3. The module of claim 1 or 2, wherein the training text includes at least one ideograph.

4. The module of claim 3, wherein the training text is written in Chinese.

5. The module of claim 3, wherein the training text is written in Japanese.

6. The module of any of claims 1 to 5, wherein the pronunciation aid is displayed above of troubling word.

7. A method of training a speech recognition system, the method comprising:
loading a quantity of training text in the form of at least one ideograph;
displaying the training text without any pronunciation aid;
receiving a notification of pronunciation difficulty relative to a troubling word within the training text; and
selectively providing a pronunciation aid relative to the troubling word to indicate a pronunciation of the troubling word,
**characterized in that**
the pronunciation aid is only displayed after the pronunciation difficulty has been detected.

8. The method of claim 7, wherein providing the pronunciation aid includes displaying a rubi.

9. The method of claim 7 or 8, wherein the training text is written in Chinese.

10. The method of claim 7 or 8, wherein the training text is written in Japanese.

11. The method of any of claims 7 to 10, wherein the notification is received from a speech recognition engine.

12. The method of any of claims 7 to 11, wherein the pronunciation difficulty includes a pause.

13. The method of any of claims 7 to 11, wherein the pronunciation difficulty includes a mispronunciation.

## Patentansprüche

1. User-Interface-Modul (240) zum Spracherkennungstraining, wobei das Modul umfasst:
Trainingstextteil (244) zum Anzeigen von Trainingstext;
Kommunikationskanal (246) kopplungsfähig mit einer Spracherkennungsmaschine (248), um von der Maschine einen Hinweis auf eine Ausspracheschwierigkeit von der Maschine bezüglich eines Umstände bereitenden Worts innerhalb des Trainingstexts zu empfangen; und
selektiv angezeigte Aussprachehilfe (242), die geeignet ist, eine Aussprache des Umstände bereitenden Worts als Antwort auf den Hinweis auf eine Ausspracheschwierigkeit anzugeben,
**dadurch gekennzeichnet, dass**
die Aussprachehilfe nur angezeigt wird, nachdem die Ausspracheschwierigkeit durch die Spracherkennungsmaschine erkannt worden ist.

2. Modul nach Anspruch 1, wobei die selektiv angezeigte Aussprachehilfe ein Rubi ist.

3. Modul nach Anspruch 1 oder 2, wobei der Trainingstext mindestens ein Ideogramm einschließt.

4. Modul nach Anspruch 3, wobei der Trainingstext in Chinesisch geschrieben ist.

5. Modul nach Anspruch 3, wobei der Trainingstext in Japanisch geschrieben ist.

6. Modul nach einem der Ansprüche 1 bis 5, wobei die Aussprachehilfe oberhalb des Umstände bereitenden Worts angezeigt wird.

7. Verfahren zum Trainieren eines Spracherkennungssystems, wobei das Verfahren umfasst:
Laden einer Menge an Trainingstext in Form von mindestens einem Ideogramm;
Anzeigen des Trainingstexts ohne irgendeine Aussprachehilfe;
Empfangen einer Meldung einer Ausspracheschwierigkeit bezüglich eines Umstände bereitenden Worts innerhalb des Trainingstexts; und
selektives Bereitstellen einer Aussprachehilfe bezüglich des Umstände bereitenden Worts, um eine Aussprache des Umstände bereitenden Worts anzugeben,
**dadurch gekennzeichnet, dass**
die Aussprachehilfe nur angezeigt wird, nachdem die Ausspracheschwierigkeit erkannt worden ist.

8. Verfahren nach Anspruch 7, wobei das Bereitstellen der Aussprachehilfe das Anzeigen eines Rubi einschließt.

9. Verfahren nach Anspruch 7 oder 8, wobei der Trainingstext in Chinesisch geschrieben ist.

10. Verfahren nach Anspruch 7 oder 8, wobei der Trainingstext in Japanisch geschrieben ist.

11. Verfahren nach einem der Ansprüche 7 bis 10, wobei die Meldung von einer Spracherkennungsmaschine empfangen wird.

12. Verfahren nach einem der Ansprüche 7 bis 11, wobei die Ausspracheschwierigkeit eine Pause einschließt.

13. Verfahren nach einem der Ansprüche 7 bis 11, wobei die Ausspracheschwierigkeit eine falsche Aussprache einschließt.

## Revendications

1. Module d'interface utilisateur (240) pour l'entraînement à la reconnaissance de la parole, le module comprenant :
une partie de texte d'entraînement (244) destinée à afficher un texte d'entraînement ;
un canal de communication (246) pouvant être couplé à un moteur de reconnaissance de la parole (248) destiné à recevoir une indication d'une difficulté de prononciation provenant du moteur se rapportant à un mot qui pose problème dans le texte d'entraînement ; et
une aide à la prononciation (242) affichée de manière sélective disposée de manière à indiquer une prononciation du mot qui pose problème en réponse à l'indication de la difficulté de prononciation ;
**caractérisé en ce que** :
l'aide à la prononciation n'est affichée qu'après la détection de la difficulté de prononciation par le moteur de reconnaissance de la parole.

2. Module selon la revendication 1, dans lequel l'aide à la prononciation affichée de manière sélective est un rubi.

3. Module selon la revendication 1 ou 2, dans lequel le texte d'entraînement comprend au moins un idéogramme.

4. Module selon la revendication 3, dans lequel le texte d'entraînement est écrit en chinois.

5. Module selon la revendication 3, dans lequel le texte d'entraînement est écrit en japonais.

6. Module selon l'une quelconque des revendications 1 à 5, dans lequel l'aide à la prononciation est affichée au-dessus du mot qui pose problème.

7. Méthode d'entraînement d'un système de reconnaissance de la parole, la méthode comprenant les étapes consistant à :
charger une quantité de texte d'entraînement se présentant sous la forme d'au moins un idéogramme ;
afficher le texte d'entraînement sans aucune aide à la prononciation ;
recevoir un signalement d'une difficulté de prononciation se rapportant à un mot qui pose problème dans le texte d'entraînement ; et
fournir de manière sélective une aide à la prononciation se rapportant au mot qui pose problème afin d'indiquer une prononciation du mot qui pose problème ;
**caractérisée en ce que** :
l'aide à la prononciation n'est affichée qu'après la détection de la difficulté de prononciation.

8. Méthode selon la revendication 7, dans laquelle le fait de fournir l'aide à la prononciation comprend l'affichage d'un rubi.

9. Méthode selon la revendication 7 ou 8, dans laquelle le texte d'entraînement est écrit en chinois.

10. Méthode selon la revendication 7 ou 8, dans laquelle le texte d'entraînement est écrit en japonais.

11. Méthode selon l'une quelconque des revendications 7 à 10, dans laquelle le signalement est reçu à partir d'un moteur de reconnaissance de la parole.

12. Méthode selon l'une quelconque des revendications 7 à 11, dans laquelle la difficulté de prononciation comprend une pause.

13. Méthode selon l'une quelconque des revendications 7 à 11, dans laquelle la difficulté de prononciation comprend un défaut de prononciation.
